# EUROPÄISCHE PATENTSCHRIFT

(11) **EP 4 227 797 B1**
(45) Veröffentlichungstag und Bekanntmachung des Hinweises auf die Patenterteilung: **02.10.2024**
(21) Anmeldenummer: 22156621.9
(22) Anmeldetag: 14.02.2022
(51) Int. Cl.: H04L 67/125, G06F 8/30, G06F 9/4401, H04L 67/00, G06F 8/61

(54) **VERFAHREN ZUM GENERIEREN EINES ZWILLINGS-SENSORS MITTELS PARAMETERVERERBUNG UND EIN SENSOR, EIN MOBILES GERÄT UND EIN SYSTEM FÜR DIESES VERFAHREN**
METHOD FOR GENERATING A TWIN SENSOR USING PARAMETER INHERITANCE AND A SENSOR, A MOBILE DEVICE AND A SYSTEM FOR THE SAME
PROCÉDÉ DE GÉNÉRATION D'UN CAPTEUR JUMEAU AU MOYEN DE LA TRANSMISSION DES PARAMÈTRES ET UN CAPTEUR, UN DISPOSITIF MOBILE ET UN SYSTÈME POUR CELUI-CI

(43) Veröffentlichungstag der Anmeldung: 16.08.2023
(73) Patentinhaber: VEGA Grieshaber KG, 77709 Wolfach (DE)
(72) Erfinder: BURGERT, Florian, 77723 Gengenbach (DE); MULVEY, Tom, 77709 Oberwolfach (DE)
(74) Vertreter: Maiwald GmbH

(56) Entgegenhaltungen:
- WO-A1-2019/208630
- WO-A1-2021/002281
- US-A1- 2015 054 621
- US-A1- 2019 011 890

## Beschreibung

### Stand der Technik

In der verarbeitenden Industrie bestehen Produktionsprozesse aus Vorgängen zur Verarbeitung von Rohstoffen, wie Mischen, Erhitzen usw. Chargenprozesse gliedern die Produktionsprozesse in Chargen und werden in der Regel in Form eines Rezepts spezifiziert, das die Schritte der Ausführung von Vorgängen unter Verwendung der Anlagenausrüstung dokumentiert.

Die Produktionsprozesse werden in der Regel mit industriellen Sensoren überwacht, die Prozessmerkmale wie Druck oder Durchfluss bestimmen.

Die internationale Patentanmeldung WO 2019/208630 A1 beschreibt eine Management-Vorrichtung, die umfasst: einen Vorrichtungsinformations-Speicherabschnitt, der Erfassungsdaten-Identifizierungsinformationen speichert, die Erfassungsdaten identifizieren, die von jeder einer Vielzahl von Sensorvorrichtungen, die über ein Netzwerk kommunizieren, in Verbindung mit jeder Sensorvorrichtung ausgegeben werden; einen Datenspeicherabschnitt, der die Erfassungsdaten, die von jeder der Vielzahl von Sensorvorrichtungen empfangen werden, in Verbindung mit den Erfassungsdaten-Identifizierungsinformationen, die jeder Sensorvorrichtung zugeordnet sind, in dem Vorrichtungsinformations-Speicherabschnitt speichert; und einen Ersetzungs-Verarbeitungsabschnitt, der als Reaktion darauf, dass eine erste Sensorvorrichtung unter der Vielzahl von Sensorvorrichtungen durch eine zweite Sensorvorrichtung ersetzt wird, die erste Erfassungsdaten-Identifizierungsinformation, die der ersten Sensorvorrichtung zugeordnet ist, in dem Vorrichtungsinformations-Speicherabschnitt so einstellt, dass sie eine zweite Erfassungsdaten-Identifizierungsinformation ist, die der zweiten Sensorvorrichtung zugeordnet ist.

In der US-Anmeldung US 2015/0054621 A1 wird ein Verfahren und Systeme für die Verwendung eindeutiger Identifikatoren zum Abrufen von Konfigurationsdaten für Etikettengeräte beschrieben. Ein Beispielverfahren kann darin bestehen, einen eindeutigen Identifikator zu erhalten, der mit einer Tag-Vorrichtung verbunden ist. Das Etikett kann eine Antenne und einen Sensor enthalten, der so konfiguriert ist, dass er Sensormesswerte erhält, die über die Antenne zur Klassifizierung der Veröffentlichung drahtlos an ein Lesegerät übertragen werden können. Das Verfahren kann auch die Bestimmung von Konfigurationsparametern umfassen, die mit der Tag-Vorrichtung auf der Grundlage des eindeutigen Identifikators verbunden sind. Das Verfahren kann ferner beinhalten, dass in mindestens einem Speicher mindestens ein Teil der Konfigurationsparameter in Verbindung mit der eindeutigen Kennung gespeichert wird.

### Offenbarung der Erfindung

Da die entsprechenden Sensoren für effektive Produktionsprozesse besonders relevant sind, sollen sie, im Falle eines Defektes oder vorsorglich, entsprechend einem Wartungsintervall, schnell und einfach ausgetauscht werden können.

Die Vielfalt der angebotenen Sensoren in Bezug auf mechanische, funktionale und konfigurierbare Eigenschaften macht es wünschenswert in einer Produktionsanlage eingesetzte spezifische Sensoren einfach zu klassifizieren und zu konfigurieren, um Ersatzsensoren generieren zu können.

Gemäß Aspekten der Erfindung wird ein Verfahren zum Generieren eines Zwillings-Sensors mittels Parametervererbung, ein Sensor, ein mobiles Endgerät und ein System zum Generieren eines Zwillings-Sensors, gemäß den Merkmalen der unabhängigen Ansprüche vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen oder einem entsprechenden Ergebnis führen. In diesem Sinne kann die Reihenfolge der Verfahrensschritte entsprechend geändert werden. Einige Merkmale sind mit Zählwörtern versehen, um die Lesbarkeit zu verbessern oder die Zuordnung eindeutiger zu machen, dies impliziert aber nicht ein Vorhandensein bestimmter Merkmale.

Gemäß einem Aspekt der Erfindung wird ein Verfahren gemäß dem Anspruch 1 vorgeschlagen.,

Im Folgenden wird der erste Sensor mit dem Begriff "Sensor" bezeichnet, und ist somit von dem Zwillings-Sensor zu unterscheiden.

Gemäß einem Aspekt kann der Sensor ein in Betrieb genommener Sensor oder ein getesteter Sensor sein, der für eine gewisse Funktion sowohl mechanische als auch funktionale Merkmale aufweist und für den Betrieb des Sensors spezifisch konfiguriert wurde.

Der eineindeutige Generierungs-Code kann einer Bestellnummer entsprechen, die eine eineindeutige Beschreibung eines Gerätes, wie insbesondere eines Sensors, inklusive aller gerätespezifischer Eigenschaften bzw. Merkmale mechanischer und elektrischer Art, sowie der entsprechenden Parametrierung für beispielsweise eine Software charakterisiert.

Vorteilhafterweise kann dieser Generierungs-Code, im Unterschied zu einem HASH-Code, welcher in der Regel sehr lang ist, wie z.B. 126 Zeichen, entsprechend einer Bestellnummer über eine Online-Verbindung in einem oder mehreren Servern in einem menschenlesbaren Code beschrieben werden.

Vorteilhafterweise muss bei diesem Verfahren ein Kunde Einstellungen seines Sensors, die beispielsweise bei einer Inbetriebnahme erfolgt sind, nicht manuell zu einem Hersteller des Zwillings-Sensors übertragen.

Wenn ein Kunde sein Gerät, wie beispielsweise einen Sensor, in einer Produktions-Anlage installiert hat und eine Inbetriebnahme, entsprechend seinen Anforderungen, durchgeführt hat, sind alle Konfiguration-Parameter definiert.

Der Kunde kann dann mit einem mobilen Endgerät, d.h. einem Bedientool, wie z.B. einem Smartphone mit einer entsprechenden APP die Konfigurations-Parameter und/oder den Generierungs-Code zwischen dem Sensor bzw. dem Zwillings-Sensor und dem mobilen Endgerät übertragen.

Eine solche Übertragung kann mit einer drahtlosen Verbindung, z.B. für eine Übertragung in einer näher gelegenen Umgebung mit Bluetooth-Verfahren oder für eine Übertragung über eine größere Entfernung mit einem LoRa-Verfahren oder alternativ mit einer drahtgebundenen Verbindung oder mit Pactware DTM erfolgen.

Hierzu kann das mobile Endgerät eine Verbindung zum einem Konfigurations-Server aufnehmen und kann an den Konfigurations-Server entweder einen in dem Sensor generierten eineindeutigen Generierungs-Code für die Generierung eines Zwillings-Sensors übertragen oder entsprechende mechanische und elektrische Merkmale sowie eingestellte Konfiguration-Parametern für eine Software des Gerätes an den Konfigurations-Server übertragen, der mittels dieser Daten einen eineindeutigen Generierungs-Code für das Generieren eines Zwillings-Sensors generiert. Alternativ oder zusätzlich kann der Kunde diesen Generierungs-Code auch für eine manuelle Bestellung eines Zwillings-Sensors des in Betrieb gesetzten Sensors verwenden.

Vorteilhafterweise erhält ein Kunde mit diesem Verfahren ein identisches Gerät, bzw. einen identischen Zwillings-Sensor, der geeignet ist, den in Betrieb gesetzten Sensor zu ersetzen. Wobei insbesondere vorteilhafterweise der Zwillings-Sensor die entsprechenden Konfiguration-Parameter aufweist, um direkt gegen den Sensor ausgetauscht werden zu können.

Der Begriff Konfigurations-Server ist dabei breit zu verstehen und umfasst auch eine Kombination von einer Mehrzahl von Servern.

Der Begriff Generierungs-Code ist breit zu verstehen und umfasst jede eineindeutige Darstellung zur Festlegung von elektrischen und/oder mechanischen Merkmalen sowie den Konfigurations-Parametern des Sensors bzw. des Zwillings-Sensors. Insbesondere umfasst der Begriff Generierungs-Code eine Vielzahl von Codes, die insbesondere eine unterschiedliche Syntax aufweisen können.

Gemäß einem Aspekt kann der eineindeutige Generierungs-Code für das Generieren des Zwillings-Sensors in einem Speicherbereich des Sensors gespeichert werden, um diesen Wert für das Generieren des Zwillings-Sensors auszulesen und an den Konfigurations-Server und/oder Fertigungs-Server zu übertragen.

Gemäß einem Aspekt kann das Bereitstellen des Generierungs-Codes durch das Modul in einer Vielzahl von Schritten, beispielsweise iterativ, erfolgen.

Gemäß einem Aspekt wird vorgeschlagen, dass der Sensor und/oder ein Konfigurations-Server, der eingerichtet und konfiguriert ist, mit dem Sensor signalmäßig gekoppelt zu werden, das Konfigurations-Modul aufweist und entsprechend der Sensor oder der Konfigurations-Server den Generierungs-Code bereitstellt.

Wenn das Konfigurations-Modul Teil des Konfigurations-Servers ist, kann der Sensor einfacher ausgestaltet werden.

Wenn das Konfigurations-Modul Teil des Sensors ist, kann das Gesamtsystem einfacher ausgestaltet werden

Gemäß einem Aspekt wird vorgeschlagen, dass der Konfigurations-Server mittels des mobilen Endgeräts eingerichtet ist, mit dem Sensor signalmäßig gekoppelt zu werden. Wenn die signalmäßige Kopplung des Sensors an den Konfigurations-Server mittels des mobilen Endgeräts erfolgt, kann vorteilhafterweise ein Stromverbrauch des Sensors für die Übertragung, insbesondere der Konfigurations-Parameter an den Konfigurations-Server, verringert werden, da das mobile Endgerät nah an den Sensor gebracht werden kann.

Gemäß einem Aspekt wird vorgeschlagen, dass das Generierungs-Modul mittels einer Schnittstelle eingerichtet ist, mit dem Zwillings-Sensor signalmäßig gekoppelt zu werden, um den Generierungs-Code an den Zwillings-Sensor zu übertragen.

Eine solche Schnittstelle kann eine drahtgebundene Schnittstelle oder eine Schnittstelle sein, mit der Signale drahtlos an den Zwillings-Sensor übertragen werden können. Insbesondere kann der Generierungs-Code an den Zwillings-Sensor mittels des mobilen Endgeräts übertragen werden, wenn der Generierungs-Code von dem Generierungs-Modul des Sensors und/oder des Konfigurations-Servers an das mobile Endgerät übertragen wurde.

Gemäß einem Aspekt wird vorgeschlagen, dass das Generierungs-Modul, mittels der Schnittstelle und mittels des mobilen Endgeräts eingerichtet ist, mit dem Zwillings-Sensor signalmäßig gekoppelt zu werden, um, basierend auf dem Generierungs-Code, die Konfigurations-Parameter an den Zwillings-Sensor zu übertragen.

Gemäß einem Aspekt wird vorgeschlagen, dass der Generierungs-Code von dem Konfigurationsserver zu dem mobilen Endgerät zur Übertragung an den Zwillings-Sensor für die Generierung des Zwillings-Sensor übertragen wird.

Dazu kann insbesondere das mobile Endgerät mit einem Konfigurationsserver signalmäßig gekoppelt werden, um die Konfigurations-Parameter des Sensors mittels des Generierungs-Codes von dem Konfigurations-Server an den Zwillings-Sensor mittels des mobilen Endgeräts zu übertragen.

Gemäß einem Aspekt wird vorgeschlagen, dass bei dem Konfigurieren des Sensors mittels des mobilen Endgeräts ein Identifikationscode des Sensors von dem Sensor an das mobile Endgerät übertragen wird und die Konfigurations-Parameter mittels des mobilen Endgeräts für eine Inbetriebnahme des Sensors an den Sensor übertragen werden.

Vorteilhafterweise können mit dem Identifikationscode des Sensors spezifische mechanische und/oder elektrische Merkmale des Sensors bei der Konfiguration des Sensors berücksichtigt werden. D. h. mit anderen Worten, dass die Konfiguration des Sensors abhängig von dem Identifikationscode durchgeführt werden kann.

Gemäß einem Aspekt wird vorgeschlagen, dass zusätzlich zu den Konfigurations-Parametern der Identifikations-Code des Sensors vom Sensor an das Konfigurations-Modul übertragen wird, um, basierend auf den Konfigurations-Parametern und dem Identifikation-Code, den Generierungs-Code zu generieren.

Vorteilhafterweise kann dadurch erreicht werden, dass spezifische mechanische und/oder elektrische Merkmale des Sensors bei der Konfiguration berücksichtigt werden können.

Gemäß einem Aspekt wird vorgeschlagen, dass der Generierungs-Code von dem mobilen Endgerät an den Zwillings-Sensor übertragen wird und der Generierungs-Code in einem Speicherbereich des Sensors gespeichert wird.

Vorteilhafterweise kann dadurch erreicht werden, dass bei einer Generierung des Zwillings-Sensors auch mechanische und/oder elektrische Merkmale des Sensors, neben den Konfigurations-Parametern, berücksichtigt werden können.

Gemäß einem Aspekt wird vorgeschlagen, dass der Generierungs-Code von dem Generierungs-Modul des Sensors mittels des mobilen Endgeräts und/oder dem Generierungs-Modul des Konfigurations-Servers an einen Fertigungs-Server zur Generierung des Zwillings-Sensors übertragen wird.

Gemäß einem Aspekt können der Konfigurations-Server und der Fertigungs-Server identisch sein, d. h., dass ein Server sowohl die Funktionalität des Konfigurations-Servers als auch des Fertigungs-Servers aufweist.

Gemäß einem Aspekt wird vorgeschlagen, dass, basierend auf dem Generierungs-Code, mittels des Fertigungs-Servers eine Stückliste zur Generierung des Zwillings-Sensors erstellt wird und/oder die Konfigurations-Parameter an den Zwillings-Sensor zur Generierung übertragen werden.

Vorteilhafterweise können mittels der Stückliste elektrische und/oder mechanische Merkmale des Zwillings-Sensors definiert werden.

Gemäß einem Aspekt wird vorgeschlagen, dass das jeweilige signalmäßige Verbinden mittels eines drahtlosen Kommunikationsverfahrens durchgeführt wird. Vorteilhafterweise kann mit dem drahtlosen Kommunikationsverfahren eine signalmäßige Verbindung leicht hergestellt werden.

Gemäß einem Aspekt wird vorgeschlagen, dass das jeweilige drahtlose Kommunikationsverfahren ein Bluetooth-Verfahren und/oder ein LoRa-Verfahren umfasst.

Gemäß einem Aspekt wird vorgeschlagen, dass das Konfigurations-Modul des Sensors oder des Konfigurations-Servers konfiguriert und eingerichtet ist den Identifikationscode und/oder die Konfigurationsparameter, der/die von dem mobilen Endgerät übertragen wurden, mit entsprechenden Einträgen in einer Konfigurations-Datenbank zu vergleichen, und einen neuen Generierungs-Code generiert und für die Generierung des Zwillings-Sensors bereitstellt, wenn der Identifikationscode und/oder die Konfigurations-Parameter und/oder eine Kombination aus Identifikationscode und Konfigurations-Parameter nicht in der Konfigurations-Datenbank vorhanden sind. Wenn alternativ der Identifikationscode und/oder die Konfigurations-Parameter und/oder die Kombination aus Identifikationscode und Konfigurations-Parameter in der Konfigurations-Datenbank gespeichert sind, kann das Konfigurations-Modul einen gespeicherten Generierungs-Code für die Generierung des Zwillings-Sensors bereitstellen, um einen eineindeutigen Generierungs-Code bereitzustellen.

Gemäß einem Aspekt wird vorgeschlagen, dass der Generierungs-Code ein alphanumerischer Code ist, und insbesondere einen Typ des Sensors und/oder die Konfiguration des Sensors eineindeutig charakterisiert.

Dabei kann der Typ des Sensors mechanische und elektrische Eigenschaften des Sensors charakterisieren.

Vorteilhafterweise kann der Generierungs-Code als alphanumerischer Code manuell auf seine Richtigkeit überprüft werden, um eine einfache Fehlersuche zu ermöglichen, oder zumindest Teile des Verfahrens manuell durchführen zu können.

Erfindungsgemäß wird ein Sensor gemäß Anspruch 11 vorgeschlagen. Vorzugsweise kann der Sensor ein Generierungs-Modul aufweisen. Dabei ist der Sensor, das Interface, die Speichereinheit und das vorzugsweise vorhandene Generierungs-Modul entsprechend einem der oben beschriebenen Verfahren konfiguriert und eingerichtet. D. h. mit anderen Worten, dass der Sensor so konfiguriert und eingerichtet ist, dass er für das oben beschriebenen Verfahren eingesetzt werden kann.

Erfindungsgemäß wird ein mobiles Endgerät gemäß dem Anspruch 13 vorgeschlagen. Weiterhin enthält das mobile Endgerät eine drahtlose und/oder drahtgebundene Übertragungseinheit zur signalmäßigen Kopplung der Recheneinheit mit einem Konfigurations-Server und/oder Fertigungs-Server und eine Interfaceeinheit, die mit der Recheneinheit, zur manuellen Eingabe und Ausgabe von Werten, signalmäßig gekoppelt ist, um den Sensor zu konfigurieren. Dazu ist die Recheneinheit konfiguriert und eingerichtet, die entsprechenden Schritte des oben beschriebenen Verfahrens durchzuführen. D. h. mit anderen Worten, dass das mobile Endgerät so konfiguriert, aufgebaut bzw. eingerichtet ist, dass es für das oben beschriebene Verfahren eingesetzt werden kann

Erfindungsgemäß wird ein System gemäß dem Anspruch 14 vorgeschlagen.

Vorteilhafterweise kann mit so einem System auf eine einfache Art und Weise ein bereits konfigurierter Zwillings-Sensor generiert werden, der einen während einer Inbetriebnahme konfigurierten Sensor einfach ersetzen kann.

Es wird eine Verwendung des oben beschriebenen Systems zum Generieren eines Zwillings-Sensors mit einem der oben beschriebenen Verfahren offenbart, jedoch nicht beansprucht.

### Ausführungsbeispiele

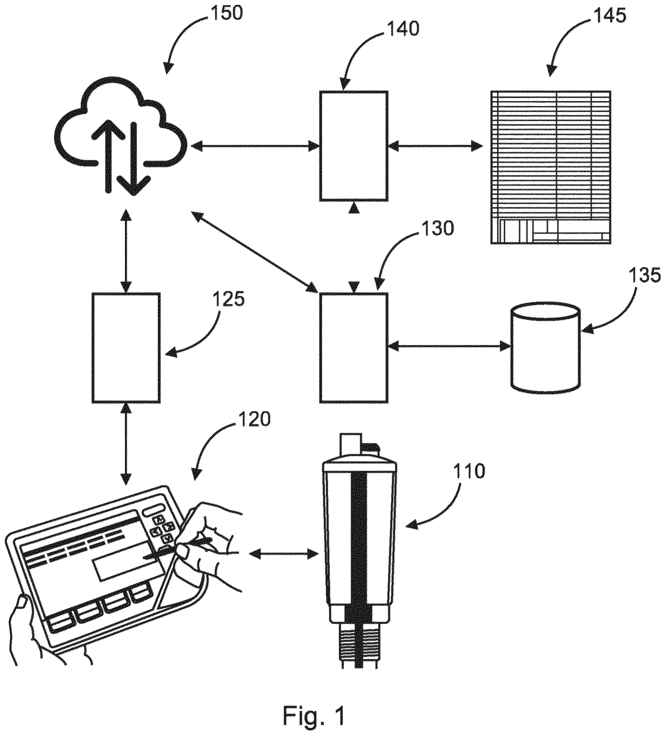

Ausführungsbeispiele der Erfindung werden mit Bezug auf die Figur 1 dargestellt und im Folgenden näher erläutert. Es zeigt:
- Figur 1: eine schematische Skizze eines Systems zum Generieren eines Zwillings-Sensors.

Die Figur 1 skizziert schematisch ein System zum Generieren eines Zwillings-Sensors, wobei der Zwillings-Sensor geeignet ist einen Sensor zu ersetzen, der beispielsweise mittels Konfigurations-Parametern in Betrieb gesetzt wurde. Dabei enthält das System einen Konfigurations-Server 130 mit einer Konfigurations-Datenbank 135 und einem Konfigurations-Modul, das Teil des Konfigurations-Servers 130 ist, und dazu dient, einen eineindeutigen Generierungs-Code für eine Vererbung von Parametern zu generieren, mit denen der Sensor 110 beispielsweise in Betrieb gesetzt wurde.

Weiterhin ist ein Fertigungs-Server 140 zum Generieren einer Stückliste 145 und ein mobiles Endgerät 120 Teil des Systems.

Dabei ist der Konfigurations-Server 130 und/oder der Fertigungs-Server 140 eingerichtet mittels einer drahtlose und/oder drahtgebundenen signalmäßigen Kopplung mit einem mobilen Endgerät 120 zu koppeln. Eine solche signalmäßige Kopplung kann mittels einer Internet-Verbindung 150 bzw. einer Cloud 150 und jeweils lokalen Übertragungsverfahren zu den Servern, die mit dem Internet bzw. der Cloud 150 verbunden sind, erfolgen. Dazu kann ein drahtloses Übertragungsverfahren 125 verwendet werden, um das mobile Endgerät 120, insbesondere über die Cloud 150 mit dem Konfigurations-Server 130 und/oder dem Fertigungs-Server 140 signalmäßig zu koppeln.

Bei dem Verfahren zum Generieren eines Zwillings-Sensors für einen Sensor 110 mittels Parametervererbung, wird in einem Schritt ein mobiles Endgerät 120 mit dem Sensor 110 signalmäßig verbunden. In einem weiteren Schritt wird der Sensor 110 mittels des mobilen Endgeräts 120 konfiguriert, wobei das Konfigurieren auf Konfigurations-Parametern basiert, die mittels des mobilen Endgeräts 120 auf den Sensor 110 übertragen werden. Dieses Konfigurieren kann beispielsweise für eine Inbetriebnahme des Sensors 110 erfolgen. In einem weiteren Schritt wird ein eindeutiger Generierungs-Code für die Vererbung der Parameter an den Zwillings-Sensor mittels eines Konfigurations-Moduls, das beispielsweise Teil des Konfigurations-Servers ist, basierend auf den Konfigurations-Parametern, generiert. In einem weiteren Schritt wird der Generierungs-Code durch das Konfigurations-Modul, für das Generieren des Zwillings-Sensors mittels Vererbung der Parameter, bereitgestellt, wobei die Vererbung der Parameter auf dem Generierungs-Code basiert.

Dabei kann das Konfigurations-Modul des Konfigurations-Servers 130 den Identifikationscode und/oder die Konfigurationsparameter, der/die von dem mobilen Endgerät 120 mittels eines, beispielsweise drahtlosen, Übertragungsverfahrens 125 und mittels der Cloud 150 übertragen wurden, mit entsprechenden Einträgen in der Konfigurations-Datenbank 135 vergleichen. Der Konfigurationsserver 130 generiert mittels des Konfigurations-Moduls einen neuen Generierungs-Code und stellt ihn für die Generierung des Zwillings-Sensors bereit, wenn der Identifikationscode und/oder die Konfigurations-Parameter und/oder eine Kombination aus Identifikationscode und Konfigurations-Parameter nicht in der Konfigurations-Datenbank vorhanden sind. Wenn aber der Identifikationscode und/oder die Konfigurations-Parameter und/oder die Kombination aus Identifikationscode und Konfigurations-Parameter in der Konfigurations-Datenbank 135 gespeichert sind, stellt der Konfigurations-Server 130 mittels eines Konfigurations-Moduls einen gespeicherten Generierungs-Code für die Generierung des Zwillings-Sensors bereit, damit der Generierungs-Code eineindeutig ist.

Alternativ kann ein von dem Konfigurations-Modul des Sensors 110 bereitgestellter Generierungs-Code mittels des mobilen Endgeräts 120 über die Cloud 150 an den Fertigungsserver 140 übertragen werden, der damit eine Stückliste 145 zur Generierung des Zwillings-Sensors generiert und/oder die Konfigurations-Parameter des Sensors 110 an den Zwillings-Sensor vererbt, indem die Konfigurations-Parameter des Sensors 110 in einen Speicher des Zwillings-Sensors übertragen werden.

Alternativ kann ein von dem Konfigurations-Modul des Sensors 110 bereitgestellter Generierungs-Code mittels des mobilen Endgeräts 120 über die Cloud 150 an den Fertigungsserver 140 übertragen werden, der damit eine Stückliste 145 zur Generierung des Zwillings-Sensors generiert und/oder die Konfigurations-Parameter des Sensors 110 an den Zwillings-Sensor vererbt, indem die Konfigurations-Parameter des Sensors 110 in einen Speicher des Zwillings-Sensors übertragen werden.

## Patentansprüche

1. Verfahren zum Bereitstellen eines Generierungs-Codes für ein Generieren eines Zwillings-Sensors mittels Parametervererbung, wobei der Zwillings-Sensor geeignet ist einen ersten Sensor (110) zu ersetzen, aufweisend:
Verbinden eines mobilen Endgeräts (120) mit dem ersten Sensor (110), um Signale zu übertragen;
Konfigurieren des ersten Sensors (110) mittels des mobilen Endgeräts (120), wobei das Konfigurieren auf Konfigurations-Parametern basiert, die mittels des mobilen Endgeräts (120) auf den ersten Sensor (110) übertragen werden, wobei die Konfigurations-Parameter für eine Inbetriebnahme des ersten Sensors (110) an den ersten Sensor (110) übertragen werden;
Generieren eines eineindeutigen Generierungs-Codes für die Vererbung der Konfigurations-Parameter mittels eines Generierungs-Moduls, basierend auf den Konfigurations-Parametern; wobei der erste Sensor (110) und/oder ein Konfigurations-Server (130), der eingerichtet und konfiguriert ist, mit dem ersten Sensor (110) signalmäßig gekoppelt zu werden, das Generierungs-Modul aufweist;
Bereitstellen des Generierungs-Codes durch das Generierungs-Modul, entsprechend durch den ersten Sensor (110) oder den Konfigurations-Server (130), für das Generieren des Zwillings-Sensors mittels Vererbung der Konfigurations-Parameter, wobei die Vererbung der Konfigurations-Parameter auf dem Generierungs-Code basiert; und wobei das Generierungs-Modul mittels einer Schnittstelle eingerichtet ist, mit dem Zwillings-Sensor signalmäßig gekoppelt zu werden, um den Generierungs-Code an den Zwillings-Sensor zu übertragen.

2. Verfahren gemäß Anspruch 1, wobei der Konfigurations-Server (130) mittels des mobilen Endgeräts (120) eingerichtet ist, mit dem ersten Sensor (110) signalmäßig gekoppelt zu werden.

3. Verfahren gemäß Anspruch 2, wobei das Generierungs-Modul, mittels der Schnittstelle und mittels des mobilen Endgeräts (120) eingerichtet ist, mit dem Zwillings-Sensor signalmäßig gekoppelt zu werden, um, basierend auf dem Generierungs-Code, die Konfigurations-Parameter an den Zwillings-Sensor zu übertragen.

4. Verfahren gemäß einem der vorhergehenden Ansprüche, wobei bei dem Konfigurieren des ersten Sensors (110) mittels des mobilen Endgeräts (120) ein Identifikationscode des ersten Sensors von dem ersten Sensor (110) an das mobile Endgerät (120) übertragen wird.

5. Verfahren gemäß Anspruch 4, wobei zusätzlich zu den Konfigurations-Parametern der Identifikations-Code des ersten Sensors vom ersten Sensor (110) an das Generierungs-Modul (130) übertragen wird, um, basierend auf den Konfigurations-Parametern und dem Identifikation-Code, den Generierungs-Code zu generieren.

6. Verfahren gemäß einem der Ansprüche 1 bis 5, wobei der Generierungs-Code von dem Generierungs-Modul des ersten Sensors mittels des mobilen Endgeräts (120) und/oder dem Generierungs-Modul des Konfigurations-Servers an einen Fertigungs-Server (140) zur Generierung des Zwillings-Sensors übertragen wird.

7. Verfahren gemäß Anspruch 6, wobei basierend auf dem Generierungs-Code mittels des Fertigungs-Servers (140) eine Stückliste (145) zur Generierung des Zwillings-Sensors erstellt wird und/oder die Konfigurations-Parameter an den Zwillings-Sensor zur Generierung übertragen werden.

8. Verfahren gemäß einem der vorhergehenden Ansprüche, wobei das jeweilige signalmäßige Verbinden mittels eines drahtlosen Kommunikationsverfahrens durchgeführt wird.

9. Verfahren gemäß einem der vorhergehenden Ansprüche, wobei das Generierungs-Modul des ersten Sensors oder des Konfigurations-Servers
den Identifikationscode und/oder die Konfigurationsparameter, der/die von dem mobilen Endgerät (120) übertragen wurden, mit entsprechenden Einträgen in einer Konfigurations-Datenbank (130) vergleicht, die außerhalb des ersten Sensors angeordnet ist;
und einen neuen Generierungs-Code generiert und für die Generierung des Zwillings-Sensors bereitstellt, wenn der Identifikationscode und/oder die Konfigurations-Parameter und/oder eine Kombination aus dem Identifikationscode und den Konfigurations-Parameter nicht in der Konfigurations-Datenbank vorhanden sind; und
einen gespeicherten Generierungs-Code für die Generierung des Zwillings-Sensors bereitstellt, wenn der Identifikationscode und/oder die Konfigurations-Parameter und/oder die Kombination aus Identifikationscode und Konfigurations-Parameter in der Konfigurations-Datenbank gespeichert sind, um einen eineindeutigen Generierungs-Code bereitzustellen.

10. Verfahren gemäß Anspruch 9, wobei der Generierungs-Code ein alphanumerischer Code ist, und insbesondere einen Typ des ersten Sensors und/oder die Konfiguration des ersten Sensors (110) eineindeutig charakterisiert.

11. Sensor (110) aufweisend:
ein Interface zum signalmäßigen Koppeln des Sensors mit einem mobilen Endgerät;
einer Speichereinheit zur Speicherung von Konfigurations-Parametern; wobei der Sensor vorzugsweise ein Generierung-Modul aufweist; und wobei der Sensor eingerichtet ist, ein Verfahren zum Bereitstellen eines Generierungs-Codes für ein Generieren eines Zwillings-Sensors mittels Parametervererbung auszuführen, wobei der Zwillings-Sensor geeignet, ist den Sensor (110) zu ersetzen, und wobei das Verfahren die folgenden Schritte aufweist:
Verbinden eines mobilen Endgeräts (120) mit dem Sensor (110), um Signale zu übertragen;
Konfigurieren des Sensors (110) mittels des mobilen Endgeräts (120), wobei das Konfigurieren auf Konfigurations-Parametern basiert, die mittels des mobilen Endgeräts (120) auf den Sensor (110) übertragen werden;
Generieren eines eineindeutigen Generierungs-Codes für die Vererbung der Parameter mittels eines Generierungs-Moduls, basierend auf den Konfigurations-Parametern; wobei der Sensor (110) und/oder ein Konfigurations-Server (130), der eingerichtet und konfiguriert ist, mit dem Sensor (110) signalmäßig gekoppelt zu werden, das Generierungs-Modul aufweist; und
Bereitstellen des Generierungs-Codes durch das Generierungs-Modul, entsprechend durch den Sensor (110) oder den Konfigurations-Server (130), für das Generieren des Zwillings-Sensors mittels Vererbung der Konfigurations-Parameter, wobei die Vererbung der Parameter auf dem Generierungs-Code basiert.

12. Sensor gemäß Anspruch 11, der eingerichtet ist, ein Verfahren gemäß einem der Ansprüche 2 bis 10 auszuführen.

13. Mobiles Endgerät (120), mit
einer Recheneinheit;
einer drahtlosen und/oder drahtgebundenen Übertragungseinheit zur signalmäßigen Kopplung der Recheneinheit mit einem Sensor (110);
einer drahtlosen und/oder drahtgebunden Übertragungseinheit zur signalmäßigen Kopplung der Recheneinheit mit einem Konfigurations-Server (130) und/oder Fertigungs-Server (140); und
einer Interfaceeinheit, die mit der Recheneinheit signalmäßig gekoppelt ist, zur manuellen Eingabe und Ausgabe von Werten, für ein Konfigurieren des Sensors (110);
wobei die Recheneinheit und das mobile Endgerät entsprechend einem Verfahren gemäß Anspruch 1-10 konfiguriert und eingerichtet ist, die entsprechenden Schritte durchzuführen.

14. System zum Generieren eines Zwillings-Sensors mit einem Verfahren gemäß Anspruch 1 bis 10, aufweisend:
einen Konfigurations-Server (130) mit einer Konfigurations-Datenbank (135) und einem Generierungs-Modul zum Generieren eines eineindeutigen Generierungs-Codes;
ein mobiles Endgerät (120) gemäß Anspruch 13; und
einen Fertigungs-Server (140) zum Generieren einer Stückliste (145); und
wobei der Konfigurations-Server (130) und/oder der Fertigung-Server (140) eine drahtlose und/oder drahtgebundenen Übertragungseinheit zur signalmäßigen Kopplung mit dem mobilen Endgerät (120) aufweist.

## Claims

1. Method of providing a generation code for generating a twin sensor by parameter inheritance, the twin sensor being adapted for replacing a sensor (110), comprising:
connecting a mobile terminal (120) to the first sensor (110) to transmit signals;
configuring the first sensor (110) by means of the mobile terminal (120), wherein the configuring is based on configuration parameters transmitted to the first sensor (110) by means of the mobile terminal (120), wherein the configuration parameters are transmitted to the first sensor (110) for a commissioning of the first sensor (110);
generating a unique generation code for the inheritance of the configuration parameters by means of a generation module based on the configuration parameters; wherein the first sensor (110) and/or a configuration server (130), which is adapted and configured to be signal-coupled to the first sensor (110), comprises the generation module;
providing the generation code by the generation module, respectively by the first sensor (110) or the configuration server (130), for generating the twin sensor by inheritance of the configuration parameters, wherein the inheritance of the configuration parameters is based on the generation code; and wherein the generation module is configured to be signal-coupled to the twin sensor by means of an interface for transmitting the generation code to the twin sensor.

2. Method according to claim 1, wherein the configuration server (130) is configured to be signal-coupled to the sensor (110) by means of the mobile terminal (120).

3. Method according to claim 2, wherein the generation module, by means of the interface and by means of the mobile terminal (120), is configured to be signal-coupled to the twin sensor to transmit, based on the generation code, the configuration parameters to the twin sensor.

4. Method according to any one of the preceding claims, wherein, when configuring the first sensor (110) by means of the mobile terminal (120), an identification code of the first sensor is transmitted from the first sensor (110) to the mobile terminal (120).

5. Method according to claim 4, wherein, in addition to the configuration parameters, the identification code of the first sensor is transmitted from the first sensor (110) to the generation configuration(130) to generate the generation code based on the configuration parameters and the identification code.

6. Method according to any one of claims 1 to 5, wherein the generation code is transmitted from the generation module of the sensor by means of the mobile terminal (120) and/or the generation module of the configuration server to a manufacturing server (140) for generating the twin sensor.

7. Method according to claim 6, wherein based on the generation code, a parts list (145) for generating the twin sensor is created by means of the manufacturing server (140) and/or the configuration parameters are transmitted to the twin sensor for generation.

8. Method according to any one of the preceding claims, wherein the respective signaling connection is performed by means of a wireless communication method.

9. Method according to any one of the preceding claims, wherein the generation module of the first sensor or the configuration server
compares the identification code and/or the configuration parameters transmitted from the mobile terminal (120) with corresponding entries in a configuration database (130) arranged outside the first sensor;
and generates and provides a new generation code for the generation of the twin sensor if the identification code and/or the configuration parameters and/or a combination of the identification code and the configuration parameters are not present in the configuration database; and
provides a stored generation code for generating the twin sensor when the identification code and/or the configuration parameters and/or the combination of the identification code and the configuration parameters are stored in the configuration database to provide a unique generation code.

10. Method according to claim 9, wherein the generation code is an alphanumeric code, and in particular uniquely characterizes a type of the sensor and/or the configuration of the sensor (110).

11. Sensor (110), comprising:
an interface for signal coupling of the sensor with a mobile terminal device;
a memory unit for storing the configuration parameters; wherein the sensor preferably comprises a generation module; and wherein
the sensor is configured to perform a method for providing a generation code for generating a twin sensor by means of parameter inheritance, wherein the twin sensor is configured to replace the sensor (110), and wherein the method comprises the following steps:
connecting a mobile terminal (120) to the sensor (110) to transmit signals; and
transmit signals;
configuring the sensor (110) by means of the mobile terminal (120), wherein
the configuring is based on configuration parameters transmitted to the sensor (110) by the mobile terminal (120);
generating a unique generation code for the inheritance of the parameters by means of a generation module based on the configuration parameters; wherein the sensor (110) and/or a configuration server (130) adapted and configured to be signal coupled to the sensor (110) comprises the generation configuration; and
providing the generation code by the generation configuration, respectively by the sensor (110) or the configuration server (130), for generating the twin sensor by inheritance of the configuration parameters, wherein the inheritance of the parameters is based on the generation code.

12. Sensor according to claim 11, which is configured to perform a method according to any one of claims 2 to 10.

13. Mobile terminal (120), comprising
a computing unit;
a wireless and/or wired transmission unit for signal coupling the computing unit to a sensor (110);
a wireless and/or wired transmission unit for signal coupling of the computing unit with a configuration server (130) and/or production server (140); and
an interface unit, which is signal-coupled to the computing unit, for manual input and output of values for configuring the sensor (110);
wherein the computing unit and the mobile terminal is configured according to a method according to claim 1-10 and is configured to perform the corresponding steps.

14. System for generating a twin sensor with a method according to claim 1-10, comprising
a configuration server (130) having a configuration database (135) and a generation module for generating a one-to-one generation code;
a mobile terminal (120) according to claim 13; and
a manufacturing server (140) for generating a bill of materials (145); and
wherein the configuration server (130) and/or the manufacturing server (140) comprises a wireless and/or wired transmission unit for signal coupling with the mobile terminal (120).

## Revendications

1. Procédé pour fournir un code de génération pour générer un capteur jumeau par héritage de paramètres, le capteur jumeau étant adapté à remplacer un premier capteur (110), comportant de :
relier un terminal mobile (120) au premier capteur (110) pour transmettre des signaux ;
configurer le premier capteur (110) au moyen du terminal mobile (120), la configuration étant basée sur des paramètres de configuration qui sont transmis au premier capteur (110) au moyen du terminal mobile (120), les paramètres de configuration étant transmis au premier capteur (110) pour une mise en service du premier capteur (110) ;
générer un code de génération univoque pour l'héritage des paramètres de configuration au moyen d'un module de génération, sur la base des paramètres de configuration ; le premier capteur (110) et/ou un serveur de configuration (130), qui est conçu et configuré pour être couplé par signaux avec le premier capteur (110), présentant le module de génération ;
fournir le code de génération par le module de génération, selon le cas par le premier capteur (110) ou le serveur de configuration (130), pour générer le capteur jumeau par héritage des paramètres de configuration, l'héritage des paramètres de configuration étant basé sur le code de génération ; et le module de génération étant conçu, au moyen d'une interface, pour être couplé par signaux au capteur jumeau afin de transmettre le code de génération au capteur jumeau.

2. Procédé selon la revendication 1, dans lequel le serveur de configuration (130) est conçu, au moyen du terminal mobile (120), pour être couplé par signaux au premier capteur (110).

3. Procédé selon la revendication 2, dans lequel le module de génération est conçu, au moyen de l'interface et au moyen du terminal mobile (120), pour être couplé par signaux au capteur jumeau afin de transmettre, sur la base du code de génération, les paramètres de configuration au capteur jumeau.

4. Procédé selon l'une des revendications précédentes, dans lequel, lors de la configuration du premier capteur (110) au moyen du terminal mobile (120), un code d'identification du premier capteur est transmis par le premier capteur (110) au terminal mobile (120).

5. Procédé selon la revendication 4, dans lequel, en plus des paramètres de configuration, le code d'identification du premier capteur est transmis par le premier capteur (110) au module de génération (130) pour générer le code de génération sur la base des paramètres de configuration et du code d'identification.

6. Procédé selon l'une des revendications 1 à 5, dans lequel le code de génération est transmis, par le module de génération du premier capteur au moyen du terminal mobile (120) et/ou par le module de génération du serveur de configuration, à un serveur de fabrication (140) pour générer le capteur jumeau.

7. Procédé selon la revendication 6, dans lequel, sur la base du code de génération, au moyen du serveur de fabrication (140), une nomenclature (145) est établie pour générer le capteur jumeau et/ou les paramètres de configuration sont transmis au capteur jumeau pour sa génération.

8. Procédé selon l'une des revendications précédentes, dans lequel la liaison par signaux respective est réalisée au moyen d'un procédé de communication sans fil.

9. Procédé selon l'une des revendications précédentes, dans lequel le module de génération du premier capteur ou du serveur de configuration
compare le code d'identification et/ou les paramètres de configuration qui a/ont été transmis par le terminal mobile (120) avec des entrées correspondantes dans une base de données de configuration (130) située à l'extérieur du premier capteur ;
et génère un nouveau code de génération et le fournit pour la génération du capteur jumeau si le code d'identification et/ou les paramètres de configuration et/ou une combinaison du code d'identification et des paramètres de configuration n'existent pas dans la base de données de configuration ; et
fournit un code de génération stocké pour la génération du capteur jumeau lorsque le code d'identification et/ou les paramètres de configuration et/ou la combinaison du code d'identification et des paramètres de configuration sont stockés dans la base de données de configuration, afin de fournir un code de génération univoque.

10. Procédé selon la revendication 9, dans lequel le code de génération est un code alphanumérique et caractérise en particulier de manière univoque un type du premier capteur et/ou la configuration du premier capteur (110).

11. Capteur (110) présentant :
une interface pour le couplage par signaux du capteur avec un terminal mobile ;
une unité de stockage pour stocker des paramètres de configuration ;
le capteur présentant de préférence un module de génération ; et le capteur étant conçu pour exécuter un procédé pour fournir un code de génération pour générer un capteur jumeau par héritage de paramètres, le capteur jumeau étant adapté à remplacer le capteur (110), le procédé comportent les étapes suivantes de :
relier un terminal mobile (120) au capteur (110) pour transmettre des signaux ;
configurer le capteur (110) au moyen du terminal mobile (120), la configuration étant basée sur des paramètres de configuration qui sont transmis au capteur (110) au moyen du terminal mobile (120) ;
générer un code de génération univoque pour l'héritage des paramètres au moyen d'un module de génération, sur la base des paramètres de configuration ; le capteur (110) et/ou un serveur de configuration (130), qui est conçu et configuré pour être couplé par signaux au capteur (110), présentant le module de génération ; et
fournir le code de génération par le module de génération, selon le cas par le capteur (110) ou le serveur de configuration (130), pour la génération du capteur jumeau par héritage des paramètres de configuration, l'héritage des paramètres étant basé sur le code de génération.

12. Capteur selon la revendication 11, conçu pour mettre en œuvre un procédé selon l'une des revendications 2 à 10.

13. Terminal mobile (120), comprenant :
une unité de calcul ;
une unité de transmission sans fil et/ou filaire pour le couplage par signaux de l'unité de calcul avec un capteur (110) ;
une unité de transmission sans fil et/ou filaire pour le couplage par signaux de l'unité de calcul avec un serveur de configuration (130) et/ou un serveur de fabrication (140) ; et
une unité d'interface, qui est couplée par signaux à l'unité de calcul, pour l'entrée et la sortie manuelles de valeurs, pour une configuration du capteur (110) ;
dans lequel l'unité de calcul et le terminal mobile sont configurés et conçus pour exécuter les étapes d'un procédé selon les revendications 1 à 10.

14. Système pour générer un capteur jumeau avec un procédé selon les revendications 1 à 10, présentant :
un serveur de configuration (130) avec une base de données de configuration (135) et un module de génération pour générer un code de génération univoque ;
un terminal mobile (120) selon la revendication 13 ; et
un serveur de fabrication (140) pour générer une nomenclature (145) ; et
dans lequel le serveur de configuration (130) et/ou le serveur de fabrication (140) présente une unité de transmission sans fil et/ou filaire pour le couplage par signaux avec le terminal mobile (120).
